# EUROPÄISCHE PATENTSCHRIFT

(11) **EP 1 177 387 B1**
(45) Veröffentlichungstag und Bekanntmachung des Hinweises auf die Patenterteilung: **01.12.2004**
(21) Anmeldenummer: 00922514.5
(22) Anmeldetag: 12.03.2000
(51) Int. Cl.: F16B 19/10

(54) **VERBINDUNGSELEMENT**
CONNECTING ELEMENT
ELEMENT D'ASSEMBLAGE

(30) Priorität: 10.05.1999 DE 19921613
(43) Veröffentlichungstag der Anmeldung: 06.02.2002
(73) Patentinhaber: TRW CARR FRANCE, 67340 Ingwiller (FR)
(72) Erfinder: HOLZMANN, Jean-Paul, F-67330 Niedersoulzbach (FR); KLEIN, Jean-Luc, F-67350 Ringendorf (FR)
(74) Vertreter: Schieschke, Klaus, Dipl.-Ing.
(86) Internationale Anmeldenummer: PCT/EP2000/002169
(87) Internationale Veröffentlichungsnummer: WO 2000/068582

(56) Entgegenhaltungen:
- US-A- 5 375 954
- US-A- 5 641 255

## Beschreibung

Die Erfindung bezieht sich auf ein Verbindungselement zwischen einem Träger, insbesondere einem Karosserieteil eines Kraftfahrzeuges, und einem an dem Träger zu befestigenden Lagerteil, mit einem mit dem Lagerteil verbindbaren Oberteil und einem dieses durchsetzenden Unterteil, durch welches in Montagestellung mindestens ein Bereich des Oberteils hinter und/oder in einer Trägeröffnung gespreizt ist, wobei das Oberteil einen oberen Flansch mit einer zentrischen Innenverzahnung aufweist, in welche in Montagestellung eine Gegenverzahnung des Unterteils eingreifbar ist.

Nächstkommender Stand der Technik ist ein Verbindungselement (US-A-5,641,255), bei welchem der äußere Umfang des Oberteils in Form einer glatten Außenwandung ausgebildet ist. Hierdurch ist es einerseits einfach, Trägeröffnungen zu durchsetzen, wobei jedoch andererseits die Haltewirkung in axialer Richtung nur von der Spreizwirkung des Unterteils abhängt. Damit ist keine sichere Befestigung innerhalb zweier Öffnungen von Trägern gegeben.

Weiterer Stand der Technik ist eine Verbindung zwischen einem Träger, insbesondere einem Karosserieteil eines Kraftfahrzeuges und einem Plattenelement (DE 197 53 678.6). Darüber hinaus ist ein einstückig ausgebildeter Kunststoffklipp bekannt, welcher durch Eindrücken eines oberen Bereichs in einen unteren Bereich über Eingriffselemente eine Verbindung herstellt und damit seine Schließfunktion erfüllt (EP 0 415 509 A1).

Beiden vorgenannten bekannten Verbindungselementen ist gemeinsam, dass es oftmals schwierig oder überhaupt nicht möglich ist, die Verbindung auf einfache Weise wieder zu lösen.

Der vorliegenden Erfindung liegt demgegenüber die Aufgabe zugrunde, ein Verbindungselement der eingangs genannten Art zu schaffen, welches unter Verbesserung der Spreizwirkung eine Erhöhung der Haltewirkung innerhalb von Trägeröffnungen gewährleistet.

Diese Aufgabe wird erfindungsgemäß dadurch gelöst, dass das Unterteil in einem Rastbereich zwischen zwei zylindrischen Sektoren mindestens eine Rastausnehmung besitzt, in welche in Montagestellung mindestens eine Gegenrast des Oberteils eingelagert ist und dass an den oberen Flanschen des Oberteils ein mit Schlitzen versehener Schaft anschließt, dessen flexible Sektoren mit einer Außenverzahnung versehen sind.

Durch das Zusammenwirken der besonderen Gestaltung des Unterteils mit dem geschlitzten Schaft des Oberteils, welcher mit einer Außenverzahnung versehen ist, ergibt sich der Vorteil, dass bei verbesserter Spreizwirkung auch die Haltewirkung innerhalb von Trägeröffnungen verbessert wird, da sich die Außenverzahnung an den jeweiligen Innenwandungen der Trägeröffnungen von einzelnen miteinander zu verbindenden Trägern anliegt. Diese Wirkung ist besonders dann von Vorteil, wenn das erfindungsgemäße Verbindungselement im Bereich der Kraftfahrzeugtechnik eingesetzt wird, wo im Einsatz Rüttelbewegungen auftreten, durch die nach einem gewissen Zeitraum ein Lösen der Verbindung erfolgen könnte.

Vorteilhafte Weiterbildungen ergeben sich aus den Unteransprüchen.

Das Oberteil ist so gestaltet, dass in weiterer Ausgestaltung der Erfindung an den oberen Flansch ein mit Schlitzen versehener Schaft anschließt, dessen flexible Sektoren mit einer Außenverzahnung versehen sind. Der Schaft weist innenseitig seiner durchgehenden Ausnehmung konische Sektoren auf, welche in einen unteren verengten, die Gegenrast für das Unterteil bildenden Bereich münden.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: eine Seitenansicht des Oberteils des erfindungsgemäßen Verbindungselements;
- Fig. 2: eine Draufsicht auf das Oberteil nach Fig. 1;
- Fig. 3: eine Seitenansicht des Unterteils des erfindungsgemäßen Verbindungselements;
- Fig. 4: eine Unteransicht des Unterteils nach Fig. 3;
- Fig. 5: das aus Unterteil und Oberteil bestehende Verbindungselement in Seitenansicht in vormontierter Position;
- Fig. 6: das aus Unterteil und Oberteil bestehende Verbindungselement nach durchgeführter Montage, in Seitenansicht.

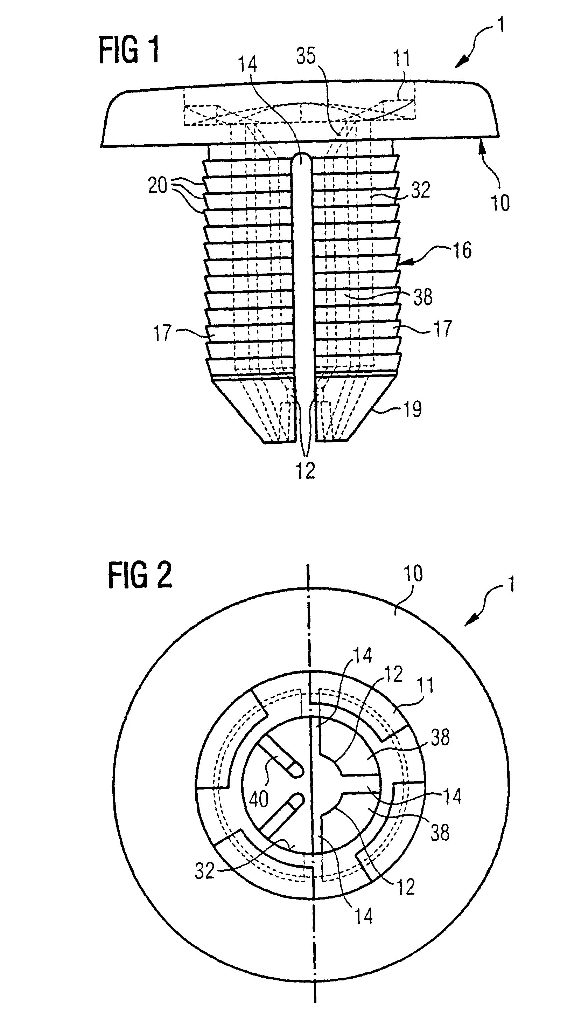

In den Fig. 1 und 2 ist ein Oberteil 1 eines Verbindungselementes dargestellt, wobei dieses Verbindungselement dazu dient, einen Träger, beispielsweise insbesondere ein Karosserieteil eines Kraftfahrzeuges mit einem an dem Träger zu befestigenden Lagerteil, beispielsweise einer Platte zu verbinden. Das Oberteil 1 weist einen oberen Flansch 10 mit einer zentrischen Innenverzahnung 11 auf.

Diese Innenverzahnung ist beispielsweise im Querschnitt dreieckförmig ausgebildet. An den oberen Flansch 10 schließt ein mit Schlitzen 14 versehener Schaft 16 an, dessen zwischen den Schlitzen 14 gebildete flexible Sektoren 17 mit einer Außenverzahnung 20 versehen sind. Diese Außenverzahnung 20 kann beispielsweise nach Art eines sog. "Tannenbaumbolzens" beschaffen sein; es besteht jedoch auch die nicht näher dargestellte Möglichkeit, die Außenverzahnung 20 etwa spiralförmig oder in anderer Form zu gestalten.

Der Schaft 16 weist insbesondere nach Fig. 2 eine durchgehende Ausnehmung 32 auf, welche gemäß der rechten Darstellung von Fig. 2 konische Sektoren 38 besitzt. Diese konischen Sektoren 38 münden in einen unteren verengten, eine Gegenrast 12 bildenden Bereich (Fig. 1). Stirnseitig ist die Ausnehmung 32 mit einer Einführschräge 35 versehen.

Alternativ besteht nach Fig. 2 linke Darstellung auch die Möglichkeit, dass der Schaft 16 innenseitig der durchgehenden Ausnehmung 32 mit Längsrippen 40 versehen ist, wobei wiederum deren unterer verengter Bereich die Gegenrast 12 bildet. Endseitig besitzt der Schaft 16 eine Zentrierschräge 19.

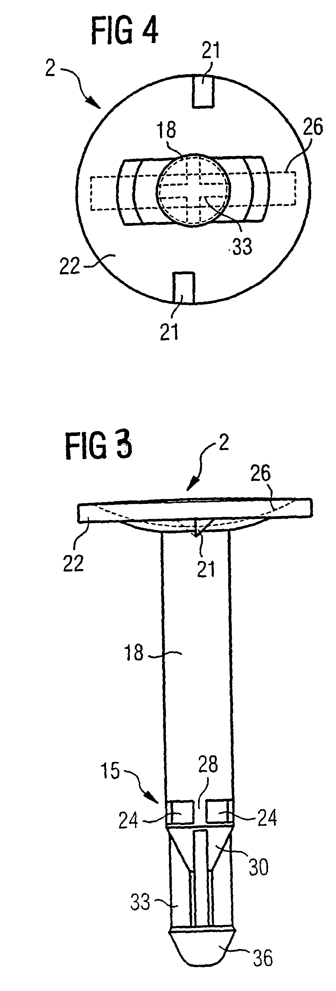

Das erfindungsgemäße Verbindungselement weist neben dem Oberteil 1 ein Unterteil 2 gemäß Fig. 3 und 4 auf. Dieses Unterteil 2 besteht aus einem oberen Abschlussflansch 22 und einem Zylinderbereich 18 mit einem Rastbereich 15. Der Abschlussflansch 22 weist oberseitig mindestens eine Eingriffsausnehmung 26 für ein nicht näher dargestelltes Demontagewerkzeug auf. Unterseitig ist der Abschlussflansch 22 mit mindestens einer Gegenverzahnung 21, beispielsweise in Form von diagonal gegenüberliegenden Zähnen, versehen. Die Gestaltung und die Anordnung dieser Gegenverzahnung 21 des Unterteils 2 ist auf die zentrische Innenverzahnung 21 des Oberteils 1 abgestellt.

Der Rastbereich 15 des Unterteils 1 besitzt in Umfangsrichtung zwischen zylindrischen Sektoren 28 mehrere Rastausnehmungen 24. Vorzugsweise sind jeweils vier zylindrische Sektoren 28 und vier Rastausnehmungen 24 vorgesehen.

An den Rastbereich 15 des Unterteils 1 schließt ein Übergangskegel 30 und ein im Querschnitt kreuzförmiges Profil 33 an, welches in ein konisches Ende 36 übergeht. Der obere Durchmesser dieses konischen Endes 36 entspricht in etwa dem Durchmesser des zylindrischen Bereiches 18 des Unterteils 2.

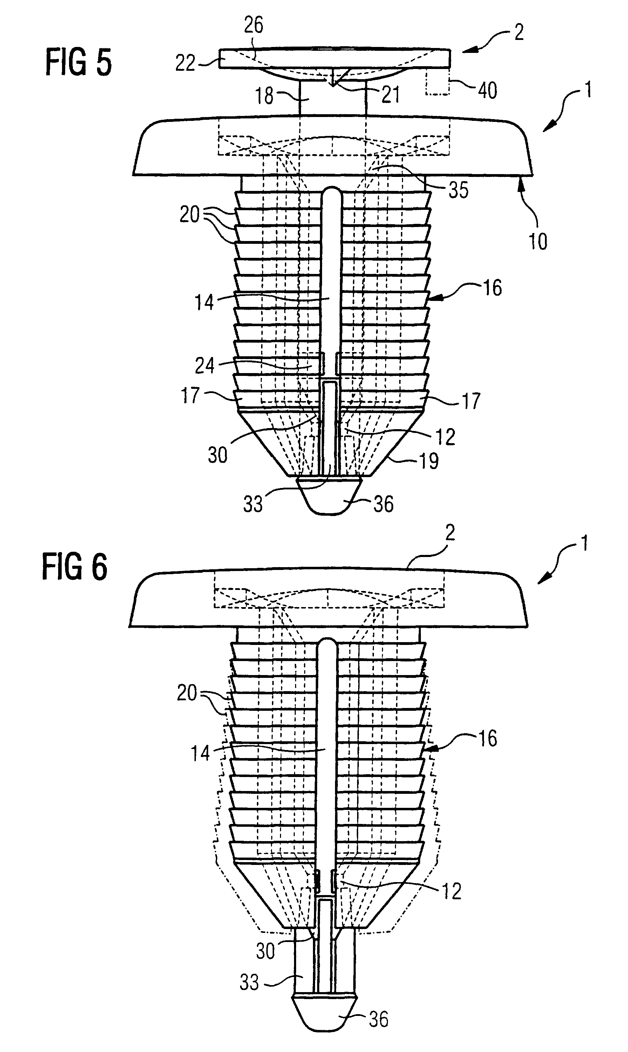

Zur Vormontage wird das Unterteil 2 gemäß Fig. 5 so in das Oberteil 1 eingesteckt, dass sich der vordere Bereich des Übergangskegels 30 des Unterteils 2 auf der Oberseite der Gegenrast 12 des Oberteils 1 befindet. In dieser Position ragt der Flansch 22 des Unterteils 2 um einen gewissen Betrag über den Flansch 10 des Oberteils 1 heraus. Das konische Ende 36 des Unterteils 2 und die Zentrierschräge 19 des Schafts 16 des Oberteils 1 bilden hierbei in diesem vormontierten Zustand eine gemeinsame, unverlierbare, konisch ausgebildete Einschubeinheit, welche zur Montageerleichterung beim Einsetzen in nicht näher dargestellte Trägeröffnungen dient. Diese Trägeröffnungen, welche koaxial angeordnet sind, befinden sich beispielsweise in zwei miteinander zu verbindenden Teilen, insbesondere einem Karosserieteil eines Kraftfahrzeuges und einem an diesem zu befestigenden Lagerteil, beispielsweise einer Platte.

Ist das so vormontierte Verbindungselement nach Fig. 5 in die entsprechenden, koaxial angeordneten Trägeröffnungen eingelagert, so wird von oben Druck auf den Abschlussflansch 22 des Unterteils ausgeübt, und zwar so lange, bis sich nach Fig. 6 der gesamte Abschlussflansch 22 in dem Flansch 10 des Oberteils 2 einlagert und mit diesem deckungsgleich ist.

Der Abschlussflansch 22 kann alternativ mit mindestens einem unterseitigen Zahn 40 versehen sein, welcher auf die zentrische Innenverzahnung 11 des Flansches 10 des Oberteils 1 abgestellt ist.

Nach der Endmontage (Fig. 6) treten das konische Ende 36, das kreuzförmige Profil 33 und der Übergangskegel 30 über die Stirnseite des Schaftes 16 des Oberteils 1 heraus, wobei sich in dieser Position die Rastausnehmungen 24 des Unterteils 2 in den entsprechenden Gegenrasten 12 des Oberteils 1 einlagern. Wie aus Fig. 6 ersichtlich, sind hierbei die flexiblen Sektoren 17 des Schaftes 16 gespreizt und bewirken somit in und außerhalb der nicht näher dargestellten Trägeröffnungen eine funktionssichere Halterung des erfindungsgemäßen Verbindungselementes.

Zur Demontage wird ein Werkzeug, beispielsweise ein Schraubendreher, eine Münze usw. in die Eingriffsausnchmung 26 eingesetzt, um das Unterteil 2 in Drehung zu versetzen, beispielsweise entgegen dem Uhrzeigersinn. Diese Bewegung mit beispielsweise ¼ Umdrehung bringt die miteinander zusammenwirkenden Flächen der Gegenverzahnung 21 des Unterteils 2 und der zentrischen Innenverzahnung 11 des Oberteils 1 in Kontakt, was eine Rückbewegung in Längsrichtung des Unterteils 2 und das Austreten der Rastausnehmungen 24 des Unterteils 2 aus der Gegenrast 12 des Oberteils 1 bewirkt. Hieraus resultiert ein Zurückbewegen der flexiblen Sektoren 17 aus der in Fig. 6 dargestellten äußeren Lage in die Ursprungslage.

Nunmehr kann das gesamte Verbindungselement aus den Trägeröffnungen herausgezogen werden, indem auf den Flansch 10 bzw. auf den Flansch 22 ein Zug ausgeübt wird. Damit lässt sich beispielsweise das Unterteil 2 allein aus dem Oberteil 1 herausziehen oder das Oberteil 1 zusammen mit dem Unterteil 2 aus den Trägeröffnungen herausbewegen.

Durch die erfindungsgemäße Gestaltung des Verbindungselements wird neben einer sehr funktionssicheren Halterung innerhalb von Trägeröffnungen auch eine gute Vormontage analog Fig. 5 mit unverlierbaren Teilen 1 und 2 sowie eine sehr gute Demontage bewirkt, welche auf einfache Weise durchzuführen ist, ohne dass hieraus eine Zerstörung des Verbindungselementes resultiert.

## Patentansprüche

1. Verbindungselement zwischen einem Träger, insbesondere einem Karosserieteil eines Kraftfahrzeuges, und einem an dem Träger zu befestigenden Lagerteil,
mit einem mit dem Lagerteil verbindbaren Oberteil (1) und einem dieses durchsetzenden Unterteil (2), durch welches in Montagestellung mindestens ein Bereich des Oberteils (1) hinter und/oder in einer Trägeröffnung gespreizt ist,
wobei das Oberteil (1) einen oberen Flansch (10) mit einer zentrischen Innenverzahnung (11) aufweist, in welche in Montagestellung eine Gegenverzahnung (21) des Unterteils (2) eingreifbar ist,
**dadurch gekennzeichnet,**
**dass** das Unterteil (2) in einem Rastbereich (15) zwischen zwei zylindrischen Sektoren (28) mindestens eine Rastausnehmung (24) besitzt, in welche in Montagestellung mindestens eine Gegenrast (12) des Oberteils (1) eingelagert ist und
**dass** an den oberen Flanschen (10) des Oberteils (1) ein mit Schlitzen (14) versehener Schaft (16) anschließt, dessen flexible Sektoren (17) mit einer Außenverzahnung (20) versehen sind.

2. Verbindungselement nach Anspruch 1, **dadurch gekennzeichnet, dass** der Schaft (16) innenseitig zu einer durchgehenden Ausnehmung (32) konische Sektoren (38) aufweist, welche in einen unteren, verengten, die Gegenrast (12) für das Unterteil (2) bildenden Bereich münden.

3. Verbindungselement nach Anspruch 1, **dadurch gekennzeichnet, dass** der Schaft (16) innenseitig zu einer durchgehenden Ausnehmung (32) Längsrippen (40) aufweist, deren unterer, verengter Bereich die Gegenrast (12) für das Unterteil (2) bildet.

4. Verbindungselement nach Anspruch 1, **dadurch gekennzeichnet, dass** der Schaft (16) endseitig eine Zentrierschräge (19) aufweist.

5. Verbindungselement nach Anspruch 4,
**dadurch gekennzeichnet, dass** das konische Ende (36) des Unterteils (2) und die Zentrierschräge (19) des Schaftes (16) des Oberteils (1) in vormontiertem Zustand des Verbindungselements als gemeinsame Einschubeinheit ausgebildet sind.

## Claims

1. Connecting element between a support, especially a body part of a motor vehicle, and a bearing part to be fastened to the support,
having a top part (1), which can be connected to the bearing part, and a bottom part (2), which passes through said top part and through which, in the assembly position, at least one region of the top part (1) is spread out behind and/or in a support opening,
wherein the top part (1) has an upper flange (10) having a centric internal toothing (11) in which, in the assembly position, a counter-toothing (21) of the bottom part (2) can be engaged,
**characterized**
**in that** the bottom part (2) possesses, in a locking region (15) between two cylindrical sectors (28), at least one locking recess (24) in which, in the assembly position, at least one counter-lock (12) of the top part (1) is embedded and
**in that** the upper flange (10) of the top part (1) is adjoined by a shaft (16) which is provided with slots (14) and the flexible sectors (17) of which are provided with an exernal toothing (20).

2. Connecting element according to Claim 1, **characterized in that** the shaft (16), on the inner side of a continuous recess (32), has conical sectors (38), which open out into a lower, constricted region forming the counter-lock (12) for the bottom part (2).

3. Connecting element according to Claim 1, **characterized in that** the shaft (16), on the inner side of a continuous recess (32), has longitudinal ribs (40), the lower, constricted region of which forms the counter-lock (12) for the bottom part (2).

4. Connecting element according to Claim 1, **characterized in that** the shaft (16) has on the end side a centring bevel (19).

5. Connecting element according to Claim 4, **characterized in that** the conical end (36) of the bottom part (2) and the centring bevel (19) of the shaft (16) of the top part (1), in the preassembled state of the connecting element, are configured as a joint plug-in unit.

## Revendications

1. Elément d'assemblage entre un support, notamment entre une pièce de carrosserie d'un véhicule automobile, et une pièce de logement ou palier à fixer sur le support.
avec une partie supérieure (1) pouvant être reliée à la pièce de logement et une partie inférieure (2) traversant celle-ci, au moyen de laquelle dans la position de montage au moins une zone de la partie supérieure (1) est écartée à l'arrière et/ou dans une ouverture de support,
dans lequel la partie supérieure (1) présente une bride supérieure (10) avec une denture interne centrale (11), dans laquelle en position de montage une contre - denture (21) de la partie inférieure peut être mise en prise,
**caractérisé en ce que**,
la partie inférieure (2) possède dans une zone d'arrêt (15), au moins un évidement d'arrêt (24) entre deux secteurs cylindriques (28), dans lequel, dans la position de montage, est incorporé au moins un contre - arrêt (12) de la partie supérieure (1) et **en ce que** sur la bride supérieure (10) de la partie supérieure (1) est raccordé un fût (16) muni de fentes (14), dont les secteurs mobiles (17) sont munis d'une denture extérieure (20).

2. Elément d'assemblage selon la revendication 1, **caractérisé en ce que** le fût (16) présente sur le côté interne par rapport à un évidement traversant (32) des secteurs coniques (38), qui débouchent dans une zone inférieure resserrée formant le contre-arrêt (12) pour la partie inférieure (2).

3. Elément d'assemblage selon la revendication 1,
**caractérisé en ce que**,
le fût (16) présente sur le côté interne par rapport à un évidement traversant (32) des nervures longitudinales (40), dont la zone inférieure rétrécie forme le contre - arrêt (12) pour la partie inférieure (2).

4. Elément d'assemblage selon la revendication 1,
**caractérisé en ce que**,
le fût (16) présente un chanfrein de centrage (19) sur le côté extrémité.

5. Elément d'assemblage selon la revendication 4,
**caractérisé en ce que**,
l'extrémité conique (36) de la partie inférieure (2) et le chanfrein de centrage (19) du fût (16) de la partie supérieure (1), à l'état pré - monté de l'élément d'assemblage, sont conçus en tant qu'unité d'insertion commune.
